# EUROPÄISCHE PATENTSCHRIFT

(11) **EP 2 738 056 B1**
(45) Veröffentlichungstag und Bekanntmachung des Hinweises auf die Patenterteilung: **09.05.2018**
(21) Anmeldenummer: 13195388.7
(22) Anmeldetag: 02.12.2013
(51) Int. Cl.: B60T 1/14

(54) **Fahrzeug mit bodengreifendem Bremssystem.**
Vehicle with braking elements acting directly on road.
Véhicule avec système de frein agissant directement avec le sol.

(30) Priorität: 30.11.2012 AT 505532012; 12.04.2013 AT 502562013
(43) Veröffentlichungstag der Anmeldung: 04.06.2014
(73) Patentinhaber: Haidlmair, Josef, 4542 Nussbach (AT); Veigl, Michael Friedhelm, 3314 Strengberg (AT)
(72) Erfinder: Haidlmair, Josef, 4542 Nussbach (AT); Veigl, Michael Friedhelm, 3314 Strengberg (AT)
(74) Vertreter: Jell, Friedrich

(56) Entgegenhaltungen:
- DE-A1- 19 950 314
- DE-A1-102005 062 279
- DE-A1-102011 012 966
- DE-A1-102011 120 179
- DE-A1-102012 003 868
- FR-A1- 2 086 428
- US-A- 2 650 679

## Beschreibung

Die Erfindung betrifft ein Fahrzeug mit mindestens einer an seiner Unterseite angeordneten Bremsplatte und mit einer zum Bewegen der Bremsplatte von einer Ruhelage in eine Bremslage auf der Fahrbahnoberfläche vorgesehenen Stelleinrichtung, die die Bremsplatte mit dem Fahrzeug über mindestens einen Träger mechanisch beweglich verbindet, wobei die Bremsplatte zusätzlich zur Stelleinrichtung über ein biegeweiches Zugelement, insbesondere mindestens ein Seil oder Band, mit dem Fahrzeug mechanisch beweglich verbunden ist.

Um eine Bremswirkung zusätzlich zur Radbremse eines Fahrzeugs zu erreichen, ist es aus dem Stand der Technik bekannt (DE102011104929A1), eine Bremsplatte mit Hilfe einer Stelleinrichtung auf die Fahrbahnoberfläche zu drücken. Zu diesem Zweck sind der Stelleinrichtung ein mit dem Fahrzeug fest verbundenes Schwenklager und ein aufblasbares Element als Träger zugeordnet, das im gefüllten Zustand die am Schwenklager befestigte Bremsplatte von ihrer Ruhelage an der Fahrzeugunterseite in eine Bremslage auf der Fahrbahnoberfläche bringt. Die zwischen der Bremsplatte und der Fahrbahnoberfläche entstehende Reibung führt zu einer zusätzlichen Bremswirkung am Fahrzeug. Allerdings kann mit Hilfe einer derartigen Konstruktion lediglich eine vergleichsweise geringe zusätzliche Bremswirkung erzeugt werden.

Des Weiteren ist es aus dem Stand der Technik bekannt (DE102009058822A1), zur Erzeugung einer zusätzlichen Bremswirkung einen Bremskörper vom Fahrzeug abzuwerfen und über ein Zugelement mit dem Fahrzeug gekoppelt nachzuziehen. Zwar kann mithilfe solch einer Einrichtung durch geeignete Wahl des Gewichts des Bremskörpers eine vergleichsweise hohe Bremswirkung erzielt werden, eine derartige Einrichtung ist jedoch aus Gründen der Verkehrssicherheit als bedenklich einzustufen.

Darüber hinaus ist aus DE102012003868A1 eine Bremsplatte bekannt, die über zwei als biegeweiche Zugelemente ausgeführte gurtförmige Elemente am Fahrschemel des Fahrzeugs befestigt ist. Über ein aufblasbares Element wird die Bremsplatte gegen die Fahrbahnoberfläche gedrückt. Nachteilig hat sich bei einer derartigen Konstruktion herausgestellt, dass sich aufgrund von Selbsthemmung der Reibbelag die Bremsplatte häufig ablöst, was Funktion der Bremsplatte erheblich beeinträchtigen kann.

Es ist daher die Aufgabe der Erfindung, ausgehend vom eingangs geschilderten Stand der Technik ein Fahrzeug mit einer Bremsplatte für eine zusätzliche Bremswirkung derart konstruktiv zu verändern, dass trotz hoher zusätzlicher Bremswirkung höchsten Anforderungen hinsichtlich Verkehrssicherheit und Standfestigkeit entsprochen werden kann. Zudem soll eine konstruktive Einfachheit erreicht werden.

Die Erfindung löst die gestellte Aufgabe dadurch, dass die Stelleinrichtung Vibrationsmittel zur aktiven Erzeugung einer Vibration an der Bremsplatte in ihrer Bremslage auf der Fahrbahnoberfläche aufweist.

Weist die Stelleinrichtung Vibrationsmittel zur aktiven Erzeugung einer Vibration an der Bremsplatte in ihrer Bremslage auf der Fahrbahnoberfläche auf, kann eine eventuelle Selbsthemmung zwischen Bremsplatte und Fahrbahnoberfläche gelöst werden, wodurch eine mechanische Überbelastung der Stelleinrichtung bzw. des biegeweichen Zugelements vermeidbar sind. Zudem kann mit dieser Vibration der Anpressdruck der Bremsplatte an die Fahrbahnoberfläche und damit die Bremswirkung noch weiter erhöht werden. Der Bremsweg des Fahrzeugs kann sich damit noch weiter vermindern. Da sich ein biegeweiches Zugelement, als zusätzliches Befestigungselement, an der Fahrzeugunterseite befindet, kann auch im Bremsfall eine Beeinträchtigung der Verkehrssicherheit ausgeschlossen werden. Des Weiteren erfordert ein biegeweiches Zugelement keine besonderen Montagevoraussetzungen, sodass eine konstruktive Einfachheit gewahrt werden kann, insbesondere wenn das Zugelement als Seil, vorzugsweise als Stahlseil, ausgebildet ist. Unter anderem kann dieses Seil oder Band vergleichsweise einfach mit einem Ende an Trägerelementen der Bodenplatte des Fahrzeugs und mit dem anderen Ende an der Stelleinrichtung und/oder Bremsplatte befestigt werden. Da dieses Zugelement biegeweich ist, kann damit auch eine Übertragung von Vibrationen der Bremsplatte auf die Karosserie des Fahrzeugs eingeschränkt werden. Ein Fahrzeug, das sich durch konstruktive Einfachheit und Verkehrssicherheit auszeichnet, sowie gegenüber dem Stand der Technik eine deutlich erhöhte Standfestigkeit aufweist, kann so geschaffen werden.

Im Allgemeinen wird erwähnt, dass unter Fahrzeug ein PKW, Bus, LKW, Dreirad, Motorrad oder dergleichen verstanden werden kann. Unter einer Bremsplatte kann jegliches flächiges Bremselement verstanden werden, das eine Kontaktoberfläche mit der Fahrbahnoberfläche ausbilden kann. Verschiedenste Reibmaterialen für ein Bremselement bzw. eine Bremsplatte sind vorstellbar, beispielsweise Kunststoffe, faserverstärkte Kunststoffe, Gummi, Kompositwerkstoffe oder dergleichen. Auch ist im Allgemeinen vorstellbar, dass vor der Bremsplatte zusätzlich Haftmittel auf die Fahrbahnoberfläche aufgesprüht werden, um die Haftreibung der Bremsplatte zu erhöhen.

Die Funktionsweise des Fahrzeugs kann verbessert werden, wenn die Frequenz der Vibration außerhalb der Resonanzfrequenz des Fahrzeugs liegt. Dadurch kann sichergestellt werden, dass sich die Vibrationen der Bremsplatte nicht mit jener der Karosserie aufschaukeln und damit das gesamte Fahrzeug in Schwingungen versetzen.

Konstruktive Einfachheit zur Energieversorgung der Vibrationsmittel kann sich ergeben, wenn mindestens ein biegeweiches Zugelement mindestens eine elektrische Leitung zur elektrischen Energieversorgung der Vibrationsmittel aufweist.

Weisen die Vibrationsmittel mindestens ein die Vibration erzeugendes, piezoelektrisches Element auf, das an der Bremsplatte befestigt ist, kann in erster Linie eine geringe Bauhöhe sichergestellt werden. Durch ein piezoelektrisches Element mit realisierbaren schnellen Schwingungen und mit kurzem Stellwegen können zudem Nachteile einer Selbsthemmung besonders schnell und zuverlässig vermieden werden.

Weisen die Vibrationsmittel mindestens ein die Vibration erzeugendes, pyrotechnisches Element auf, das an der Bremsplatte befestigt ist, kann ein schnell und kräftig wirkendes Mittel zur Erzeugung der Vibrationen genutzt werden, wodurch zuverlässige Bremsungen erreicht werden können. Aufgrund der schnellen Wirkungsweise des pyrotechnischen Elements ist denkbar, dieses erst bei Erkennen einer Selbsthemmung zu aktivieren.

Vibrationen an der Bremsplatte können mit Hilfe eines aufblasbaren Elements konstruktiv vergleichsweise einfach erzeugt werden, indem die Stelleinrichtung ein mit einem aufblasbaren Element verbundenes Ventil aufweist, mit dem der Füllungsgrad des aufblasbaren Elements in Abhängigkeit seines Öffnens und Schließens zur Erzeugung einer Vibration an der Bremsplatte veränderbar ist. Zudem kann das aufblasbare Element eine Entkopplung der Vibrationen zwischen Bremsplatte und Karosserie bewirken, wodurch die Benutzbarkeit des Fahrzeugs deutlich verbessert sein kann.

Eine leichte und dennoch mechanisch hoch belastbare Stelleinrichtung kann geschaffen werden, wenn der Träger ein bewegliches Gestänge und/oder mindestens ein aufblasbares Element aufweist, insbesondere daraus besteht, wobei am Träger die Bremsplatte befestigt ist.

Der konstruktive Aufwand kann noch weiter vermindert werden, wenn das aufblasbare Element bzw. die aufblasbaren Elemente auch den Träger ausbilden. Dies ist weiter verbesserbar, indem an mindestens einem aufblasbaren Element wenigstens ein Bremselement zur Ausbildung der Bremsplatte befestigt ist. Zudem können durch die elastische Eigenschaft des aufblasbaren Elements ein verbessertes Anliegen und somit eine erhöhte Haftung der Bremselemente bzw. der Bremsplatte an die Fahrbahnoberfläche erreicht werden. Von einer erhöhten zusätzlichen Bremskraft kann also ausgegangen werden - selbst bei unebenen Fahrbahnoberflächen. Außerdem wird im Allgemein erwähnt, dass das aufblasbare Element zur Entkopplung der Vibrationen der Bremsplatte von der Karosserie des Fahrzeugs beitragen kann.

Ist das aufblasbare Element innerhalb des Gestänges der Stelleinrichtung angeordnet, kann der mechanische Schutz des aufblasbaren Elements erhöht werden. Das Fahrzeug kann dadurch in seiner Standfestigkeit erheblich verbessert werden.

Konstruktiv einfach kann die Bremsplatte in ihre Bremslage bewegt werden, wenn die Stelleinrichtung die Bremsplatte in Abhängigkeit des Füllungsgrads mindestens eines aufblasbaren Elements beweglich lagert. Zudem kann auf diese Weise der Anpressdruck der Bremsplatte an Fahrbahnoberfläche mit Hilfe des Füllungsgrads, der beispielsweise durch einen von Airbags bekannten Gasgenerator oder Hybridgasgenerators im aufblasbaren Element erzeugt werden kann, konstruktiv einfach eingestellt werden.

Die Funktionssicherheit der Bremsplatte kann erhöht werden, wenn die Stelleinrichtung mindestens zwei aufblasbare Elemente und ein Ventil aufweist, von denen ein aufblasbares Element mit dem Ventil für einen variierenden Füllungsgrad und das andere mit einer Druckquelle für einen gleichbleibenden Füllungsgrad verbunden ist. Bei Ausfall eines der aufblasbaren Elemente kann so nämlich über wenigstens ein anderes aufblasbares Element für einen ausreichenden Anpressdruck der Bremsplatte gesorgt werden.

Ist die Bremsplatte in der Ruhelage mit einer Folie wenigstens bereichsweise abgedeckt, wobei die Folie reißfähig und damit für ein Freistellen der Bremsplatte in Abhängigkeit der Bewegung der Bremsplatte von der Ruhelage in die Bremslage ausgebildet ist, kann die Standfestigkeit des Fahrzeugs weiter erhöht werden. Durch die Folie kann die Bremsplatte in Ruhelage vor Witterungseinflüssen, Nässe, Salz, Schmutz und Fremdkörpern geschützt werden. Somit ist gewährleistbar, dass im Bedarfsfall eine unbeschädigte, unverschmutzte und trockene Bremsplatte zum Einsatz kommen, wodurch bestmögliche Bremsergebnisse zu erwarten sind.

Weist das Fahrzeug eine Unterbodenverkleidung auf und ist die Bremsplatte in ihrer Ruhelage plan mit oder gegenüber der Unterbodenverkleidung zurückgesetzt angeordnet, können Angriffspunkte für Schmutz und Fremdkörper, die die Bremsplatte oder eine eventuell vorhandene Folie beschädigen oder vom Fahrzeug reißen könnten, vermieden werden.

Konstruktive Einfachheit kann erreicht werden, wenn wenigstens ein Bremselement, insbesondere Reibbelag, die Bremsplatte ausbildet.

Einfache Montagemöglichkeiten können sich ergeben, wenn das Zugelement am vorderen und am hinteren Fahrschemel und die Stelleinrichtung an der, insbesondere hinteren, Unterseite des Fahrzeugs an das Fahrzeug fest anschließen. Zudem kann damit die Gefahr einer Beeinträchtigung des Lenkverhaltens des Fahrzeugs im Bremsfall verringert werden. Außerdem können das Zugelement und/oder die Bremsplatte an Befestigungspunkten der Karosserie angreifen, die von der Radaufhängung des Fahrzeugs genutzt werden, um so den konstruktiven Aufwand zu reduzieren.

Ist ein mit der Bremsplatte mitbewegbares Schild zwischen Fahrzeug und Bremsplatte vorgesehen, können die Beschädigungsgefahr an der Stelleinrichtung vermindert und damit die Standfestigkeit des Fahrzeugs erhöht werden.

Im Allgemeinen wird festgehalten, dass das biegeweiche Zugelement die Bremsplatte zusätzlich zur Stelleinrichtung mit dem Fahrzeug mechanisch beweglich verbindet. So kann durch diese zum Träger weitere mechanische Befestigung der Bremsplatte ein erhöhter Anpressdruck der Bremsplatte auf die Fahrbahnoberfläche erzeugt werden, ohne mit einem Abtrennen der Bremsplatte vom Fahrzeug rechnen zu müssen. Dies kann auch für eine erhöhte zusätzliche Bremskraft genutzt werden, wodurch das Fahrzeug schneller abgebremst und somit die Sicherheit für Insassen erhöht werden kann. Da sich dieses zusätzliche Befestigungselement an der Fahrzeugunterseite befindet, kann auch im Bremsfall eine Beeinträchtigung der Verkehrssicherheit ausgeschlossen werden.

In den Figuren ist beispielsweise der Erfindungsgegenstand anhand mehrerer Ausführungsbeispiele näher dargestellt. Es zeigen
- Fig. 1: eine schematische Seitenansicht eines Fahrzeugs mit einer Bremsplatte nach einem ersten Ausführungsbeispiel,
- Fig. 2: eine vergrößerte Teilansicht der Fig. 1,
- Fig. 3: eine in der Stelleinrichtung veränderte Fig. 2 nach einem zweiten Ausführungsbeispiel und
- Fig. 4: eine Draufsicht auf eine Bremsplatte und
- Fig. 5: eine Bremsplatte in ihrer Ruhelage.

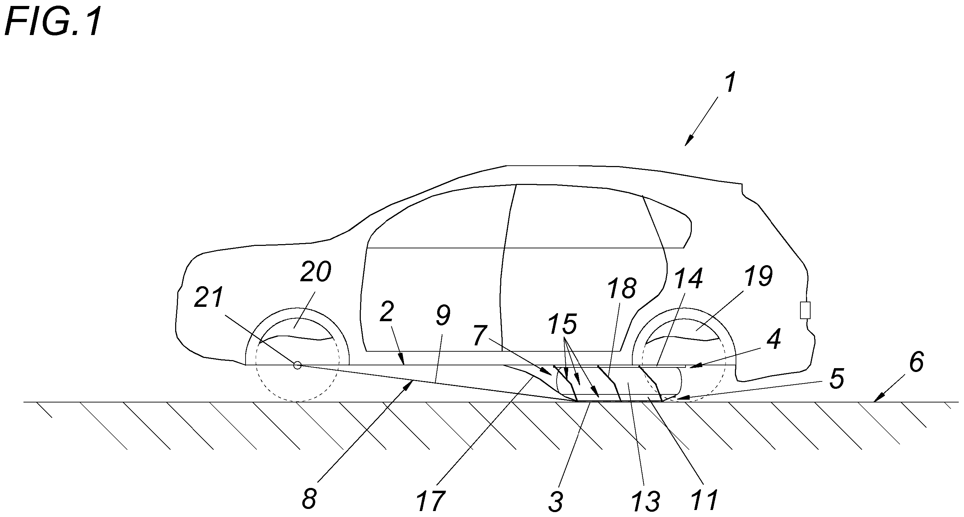

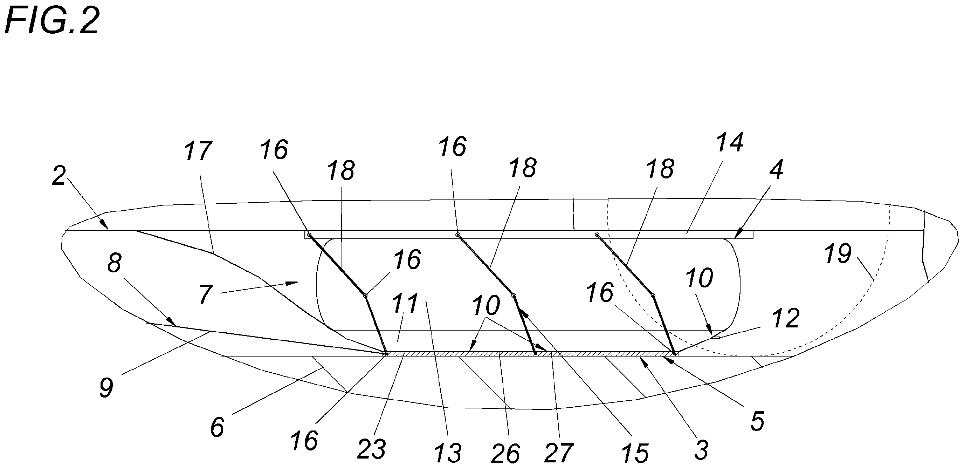

Das nach den Figuren 1 und 2 schematisch dargestellte Fahrzeug 1 weist nach seinem ersten Ausführungsbeispiel eine an seiner Unterseite 2 angeordnete Bremsplatte 3 auf. Die Bremsplatte 3, die eine Reibungsoberfläche mit einem Kunststoffwerkstoff aufweist, kann von ihrer Ruhelage 4 an der Unterseite 2 des Fahrzeugs 1 in eine Bremslage 5 bewegt werden. In der Bremslage 5 steht die Bremsplatte 3 in einem Reibungsschluss mit der Fahrbahnoberfläche 6, wodurch eine zusätzliche Bremswirkung des Fahrzeugs 1 ermöglicht werden kann. Die Bremsleistung des Fahrzeugs 1, im Wesentlichen bestimmt durch seine Radbremse, kann dadurch also erhöht werden.

Zur Bewegung der Bremsplatte 3 ist eine Stelleinrichtung 7 vorgesehen, die die Bremsplatte 3 beweglich am Fahrzeug 1 lagert und diese auch mit dem Fahrzeug 1 beweglich verbindet - somit kann die Reibung der Bremsplatte 3 auf der Fahrbahnoberfläche 6 zur Bremsung des Fahrzeugs 1 genutzt werden. Eine hohe mechanische Festigkeit in der Anbindung der Bremsplatte 3 an das Fahrzeug 1 wird erreicht, indem die Stelleinrichtung 7 die Bremsplatte 3 über mindestens einen Träger 15 mit dem Fahrzeug 1 mechanisch verbindet. Um erhöhte Reibungskräfte zur verbesserten Bremswirkung auf das Fahrzeug 1 übertragen zu können, ist die Bremsplatte 3 zusätzlich zur Stelleinrichtung 7 über ein biegeweiches Zugelement 8, nämlich Seil 9, mit dem Fahrzeug 1 mechanisch beweglich verbunden. Damit wird die Stelleinrichtung 7 mechanisch entlastet, wodurch Überbelastungen der Befestigung beim Bremsen - wie diese unter anderem durch Bodenunebenheiten verursacht werden können - und in weiterer Folge die Gefahr eines Abreißens der Bremsplatte 3 vom Fahrzeug 1 verbessert vermeidbar sind. Durch das biegeweiche Zugelement 8 ist daher ein besonders standfestes Fahrzeug 1 sichergestellt - zudem werden nicht zuletzt auch die Anforderungen hinsichtlich der Verkehrssicherheit erfüllt.

Gegenüber dem Stand der Technik wird die Bremsplatte 3 aktiv in einen vibrierenden Zustand versetzt, um eventuelle Selbsthemmung zwischen Bremsplatte 3 und Fahrbahnoberfläche 6 zu vermeiden. Zu diesem Zweck weist die Stelleinrichtung 7 Vibrationsmittel 10 auf. Mit dieser Vibration erhöht sich nämlich einerseits der Anpressdruck der Bremsplatte 3 an die Fahrbahnoberfläche 6 beziehungsweise die Bremswirkung, andererseits wird aber die Gefahr einer Selbsthemmung verringert. Somit vermindert sich der Bremsweg des Fahrzeugs 1 noch weiter, wobei eine hohe Verkehrssicherheit und Standfestigkeit gegeben ist.

Eine günstige Funktionsweise des Fahrzeugs 1 wird erreicht, indem die Frequenz der Vibrationen der Bremsplatte 3 außerhalb der Resonanzfrequenz des Fahrzeugs 1 liegt. Dadurch können sich Vibrationen der Bremsplatte 3 nicht mit der Karosserie aufschaukeln und das gesamte Fahrzeug 1 in Schwingungen versetzen.

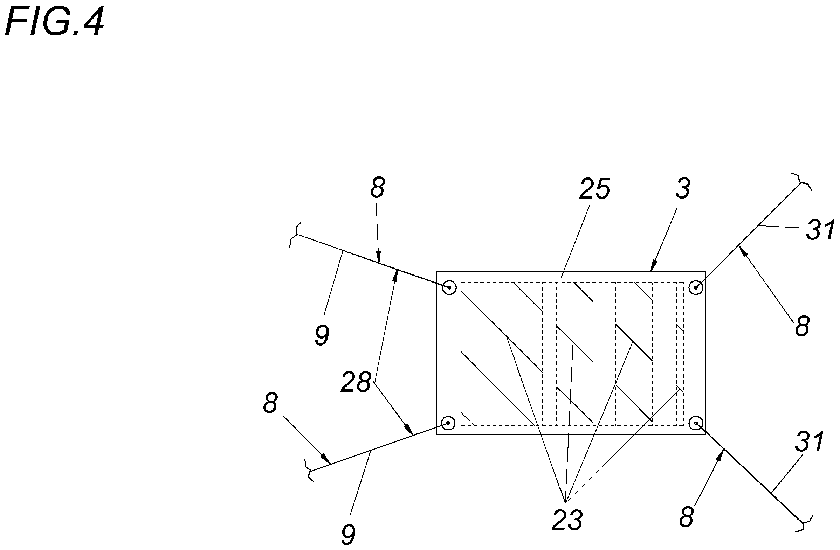

Wie aus Figur 4 zu entnehmen ist, sind in diesem Ausführungsbeispiel der Erfindung die biegeweichen Zugelemente 8 zugleich elektrische Leitungen 28, die die Vibrationsmittel 10 mit Energie versorgen.

Wie in Figur 2 dargestellt, ist es möglich, die Vibrationsmittel 10 durch ein piezoelektrisches Element 26 und/oder durch ein pyrotechnisches Element 27 auszubilden. Diese Vibrationsmittel 10 sind direkt an der Bremsplatte 3 befestigt, um eine bestmögliche Wirkung zu gewährleisten.

Die nach der Figur 2 dargestellten Vibrationsmittel umfassen auch ein aufblasbares Element 11 und ein mit diesem verbundenes Ventil 12, das den Füllungsgrad des aufblasbaren Elements 11 impulsartig verringern und damit eine Vibration an der Bremsplatte 3 erzeugen kann.

Im Allgemeinen wird festgehalten, dass zur Erzeugung der erfindungsgemäßen Vibration eines der angeführten Vibrationsmittel 10 ausreichend ist. Allerdings kann durch eine Kombination mehrerer Vibrationsmittel 10 ein besonders standfestes Fahrzeug 1 entstehen - so kann zum Beispiel eine Grundvibration mit einem piezoelektrischen Element 26 erzeugt werden und im Fall einer eintretenden Selbsthemmung ein pyrotechnisches Element 27 für eine starke überlagerte Vibration ausgelöst werden.

Die Stelleinrichtung 7 weist als Träger 15 ein bewegliches Gestänge 18 mit Schwenklagern 16 auf. Diese leichte Konstruktion wird zudem zum mechanischen Schutz der aufblasbaren Elemente 11 und 13 verwendet, indem diese innerhalb des Gestänges 18 angeordnet sind.

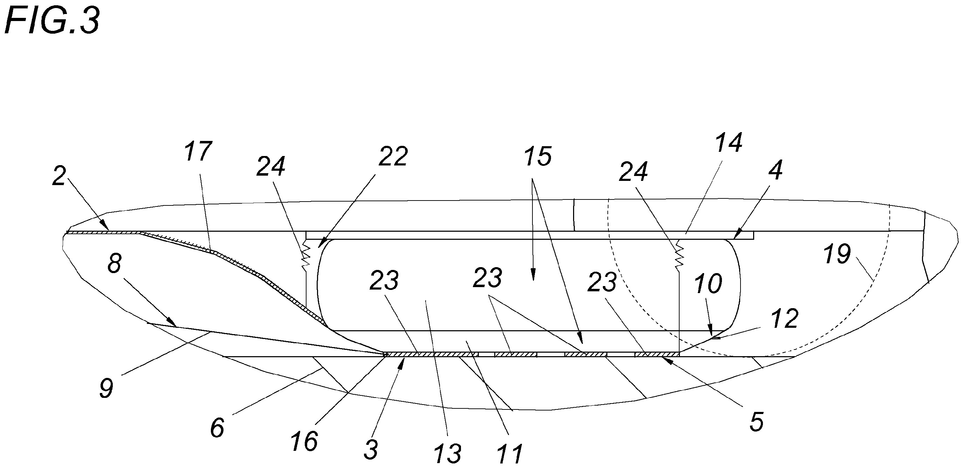

Nach Fig. 3 ist eine zur Stelleinrichtung 7 veränderte Stelleinrichtung 22 als weiteres Ausführungsbeispiel der Erfindung gezeigt. Hier bilden die aufblasbaren Elemente 11, 13 den Träger 15 aus, sodass auf ein Gestänge 18, wie in Fig. 1 und 2 dargestellt, verzichtet werden kann.

Die Stelleinrichtung 22 weist zudem Federelemente in Form von Federn 24 auf, mit denen nach einer Verwendung der Bremsplatte 3 diese zumindest soweit angehoben werden kann, dass ein Weiterfahren des Fahrzeugs 1 möglich ist, ohne dass die Bremsplatte 3 auf der Fahrbahnoberfläche 6 schleift. Solch eine Konstruktion ist auch im Allgemeinen bei der nach Fig. 1 und 2 dargestellten Stelleinrichtung 7 denkbar.

Zudem ist nach Fig. 2 und 3 dargestellt, dass durch das aufblasbare Element 11 die Bremsplatte 3 in Abhängigkeit seines Füllungsgrads bewegt werden kann, wodurch sich eine vergleichsweise einfache, leichte und standfeste mechanische Konstruktion ergibt. Der Stelleinrichtung 7, 22 ist noch ein weiteres aufblasbares Element 13 zugeordnet, das mit einer Druckquelle 14 zur Erzeugung eines gleichbleibenden Füllungsgrads verbunden ist. Das aufblasbare Element 13 ist bei diesem Ausführungsbeispiel gegenüber dem aufblasbaren Element 11 in seinem Volumen größer ausgeführt. Damit ist selbst bei einem Versagen des Ventils 12 des aufblasbaren Elements 11 sichergestellt, dass sich ein ausreichender Anpressdruck zwischen Bremsplatte 3 und Fahrbahnoberfläche 6 einstellt.

Im Allgemeinen wird festgehalten, dass auch eine nicht näher dargestellte Ausführung denkbar ist, bei der die beiden aufblasbaren Elemente 11, 13 gleich groß ausgeführt sind. Diese aufblasbaren Elemente 11, 13 können dann eine ausreichende Größe haben, um alleine die Bremsplatte 3 zur Fahrbahnoberfläche 6 zu bewegen. So kann bei Versagen eines Elements das andere einen noch ausreichenden Anpressdruck zwischen Bremsplatte 3 und Fahrbahnoberfläche 6 herstellen.

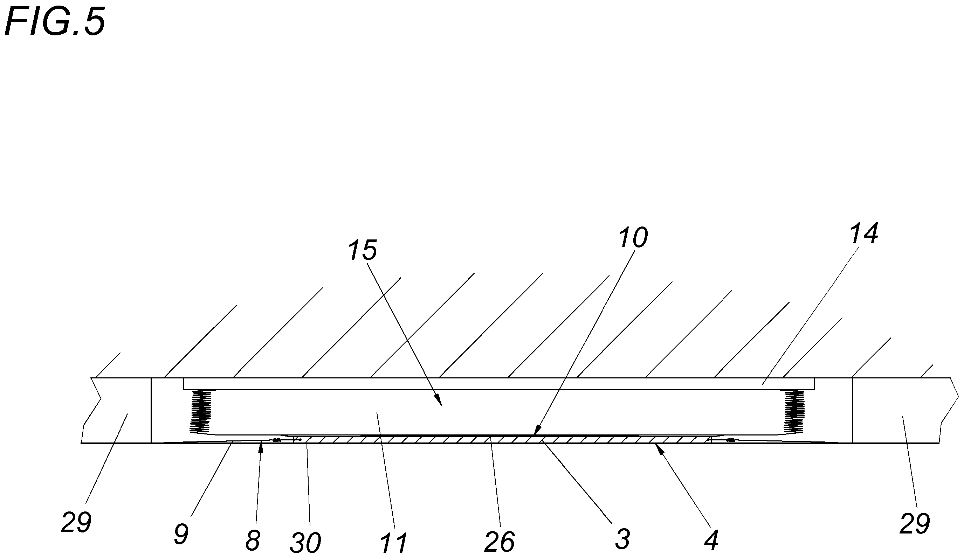

Entsprechend Figur 5 ist ein anderes Ausführungsbeispiel der Erfindung dargestellt, bei dem nur ein aufblasbares Element 11 den Träger 15 und ein piezoelektrisches Element 26 das Vibrationsmittel 10 ausbildet. In dieser Figur ist die Bremsplatte 3 in Ruhelage 4 dargestellt. Dabei schließt die zur Fahrbahnoberfläche 6 zeigende Seite der Bremsplatte 3 plan mit der Unterbodenverkleidung 29 ab. So werden hervorstehende Angriffspunkte für Schmutz und Fremdkörper, die die Bremsplatte 3 beschädigen könnten, vermieden. Zudem ist die Bremsplatte 3 mit einer reißfähigen Folie 30 abgedeckt. Diese Folie 30 schützt die Bremsplatte 3 vor Witterungseinflüssen, Nässe, Salz, Schmutz und Fremdkörpern in der Ruhelage 4. Entsteht die Notwendigkeit die Bremsplatte 3 für einen verkürzten Anhalteweg einzusetzen, wird die Bremsplatte 3 in die Bremslage 5 bewegt und die Folie 30 dabei zerrissen. Da die Bremsplatte 3 bis zu diesem Zeitpunkt durch die Folie 30 abgedeckt war, kommt nun eine unbeschädigte, unverschmutzte und trockene Bremsplatte 3 zum Einsatz. Bestmögliche Bremsergebnisse können so erzielt werden.

Wie in Figur 3 dargestellt, sind auf dem untersten aufblasbaren Element 11 mehrere Bremselemente 23 befestigt, die zusammen eine flexibel an die jeweilige Fahrbahnoberfläche 6 anpassbare und damit erheblich elastischere Bremsplatte 3 ergeben, was beispielsweise auch in der Fig. 4 erkannt werden kann. Dabei können die Bremselemente 23 aus unterschiedlichem Reibbelag hergestellt sein. Die Ausbildung der Bremsplatte 3 mit nur einem Bremselement 23 wie in Figur 2 dargestellt, ist genauso vorstellbar.

Der Figur 1 kann entnommen werden, dass das Zugelement 8 an der vorderen Unterseite 2 des Fahrzeugs 1 befestigt ist. Die Bremsplatte 3 ist an der hinteren Unterseite 2 des Fahrzeugs 1 über die Stelleinrichtung 7 am Fahrzeug 1 befestigt, wodurch eine Beeinträchtigung der Lenkbarkeit bzw. des Lenkverhaltens des Fahrzeugs 1 vermieden wird.

Wie der Fig. 1 insbesondere zu entnehmen, ist die Bremsplatte 3 im Bereich der Hinterräder 19 des Fahrzeugs 1 am Fahrzeug 1 befestigt. Als Befestigungspunkte können beispielsweise Karosseriestellen herangezogen werden, an denen die nicht näher dargestellte Radaufhängung angreift.

Das biegeweiche Zugelement 8 ist im Bereich der Vorderräder 20 und Hinterräder 19 des Fahrzeugs 1 am Fahrzeug 1 befestigt. Hierzu weist das Zugelement 8 zwei Seile 9 auf, die je an einem Befestigungspunkt 21 der Karosserie angreifen. Vorteilhaft sind dies jene Befestigungspunkte 21, an denen auch die nicht näher dargestellte Radaufhängung der Vorderräder 20 an die Karosserie angreift. Zusätzlich weist das Zugelement 8 zwei weitere Seile 31 auf, die im Bereich der nicht näher dargestellte Radaufhängung der Hinterräder 19 an die Karosserie angreifen.

Der mechanische Schutz wird zudem durch ein mit der Bremsplatte 3 mitbewegbares Schild 17 zwischen Fahrzeug 1 und Bremsplatte 3 weiter verbessert. Dass die Unterbodenverkleidung 29 des Fahrzeugs 1 das Schild 17 ausbildet, ist denkbar.

Im Allgemeinen wird erwähnt, dass das biegeweiche Zugelement 8 auch als Band in Form eines textilen Gurts oder dergleichen ausgeführt sein kann, was nicht näher dargestellt worden ist. Das biegeweiche Zugelement 8 kann direkt an der Bremsplatte 3 oder auch an einem Rahmen 25 der Bremsplatte 3 angreifen, wie dies nach Fig. 4 beispielsweise dargestellt ist. Das biegeweiche Zugelement 8 kann Verzweigungen in Längs- und/oder Querrichtung des Fahrzeugs 1 aufweisen, um damit die Lage der Bremsplatte 3 unter dem Fahrzeug 1 zu fixieren.

## Patentansprüche

1. Fahrzeug mit mindestens einer an seiner Unterseite (2) angeordneten Bremsplatte (3) und mit einer zum Bewegen der Bremsplatte (3) von einer Ruhelage (4) in eine Bremslage (5) auf der Fahrbahnoberfläche (6) vorgesehenen Stelleinrichtung (7, 22), die die Bremsplatte (3) mit dem Fahrzeug (1) über mindestens einen Träger (15) mechanisch beweglich verbindet, wobei die Bremsplatte (3) zusätzlich zur Stelleinrichtung (7, 22) über ein biegeweiches Zugelement (8), insbesondere mindestens ein Seil (9, 31) oder Band, mit dem Fahrzeug (1) mechanisch beweglich verbunden ist, **dadurch gekennzeichnet, dass** die Stelleinrichtung (7, 22) Vibrationsmittel (10) zur aktiven Erzeugung einer Vibration an der Bremsplatte (3) in ihrer Bremslage (5) auf der Fahrbahnoberfläche (6) aufweist.

2. Fahrzeug nach einem Anspruch 1, **dadurch gekennzeichnet, dass** die Frequenz der Vibration außerhalb der Resonanzfrequenz des Fahrzeugs (1) liegt.

3. Fahrzeug nach Anspruch 1 oder 2, **dadurch gekennzeichnet, dass** mindestens ein biegeweiches Zugelement (8) mindestens eine elektrische Leitung (28) zur elektrischen Energieversorgung der Vibrationsmittel (10) aufweist.

4. Fahrzeug nach Anspruch 1, 2 oder 3, **dadurch gekennzeichnet, dass** die Vibrationsmittel (10) mindestens ein die Vibration erzeugendes, piezoelektrisches Element (26) aufweisen, das an der Bremsplatte (3) befestigt ist.

5. Fahrzeug nach Anspruch 1, 2 oder 3, **dadurch gekennzeichnet, dass** die Vibrationsmittel (10) mindestens ein die Vibration erzeugendes, pyrotechnisches Element (27) aufweisen, das an der Bremsplatte (3) befestigt ist.

6. Fahrzeug nach Anspruch 1, 2 oder 3, **dadurch gekennzeichnet, dass** die Stelleinrichtung (7, 22) ein mit einem aufblasbaren Element (11) verbundenes Ventil (12) aufweist, mit dem der Füllungsgrad des aufblasbaren Elements (11) in Abhängigkeit seines Öffnens und Schließens zur Erzeugung einer Vibration an der Bremsplatte (3) veränderbar ist.

7. Fahrzeug nach einem der Ansprüche 1 bis 6, **dadurch gekennzeichnet, dass** der Träger (15) ein bewegliches Gestänge (18) und/oder mindestens ein aufblasbares Element (11, 13) aufweist, insbesondere daraus besteht, wobei am Träger (15) die Bremsplatte (3) befestigt ist.

8. Fahrzeug nach Anspruch 7, **dadurch gekennzeichnet, dass** das aufblasbare Element (11, 13) innerhalb des Gestänges (15) der Stelleinrichtung (7) angeordnet ist.

9. Fahrzeug nach Anspruch 7 oder 8, **dadurch gekennzeichnet, dass** die Stelleinrichtung (7, 22) die Bremsplatte (3) in Abhängigkeit des Füllungsgrads mindestens eines aufblasbaren Elements (11, 13) beweglich lagert.

10. Fahrzeug nach Anspruch 7, 8 oder 9, **dadurch gekennzeichnet, dass** die Stelleinrichtung (7, 22) mindestens zwei aufblasbare Elemente (11, 13) und ein Ventil (12) aufweist, von denen ein aufblasbares Element (11) mit dem Ventil (12) für einen variierenden Füllungsgrad und das andere (13) mit einer Druckquelle (14) für einen gleichbleibenden Füllungsgrad verbunden ist.

11. Fahrzeug nach einem der Ansprüche 1 bis 10, **dadurch gekennzeichnet, dass** die Bremsplatte (3) in der Ruhelage (4) mit einer Folie (30) wenigstens bereichsweise abgedeckt ist, wobei die Folie (30) reißfähig und damit für ein Freistellen der Bremsplatte (3) in Abhängigkeit der Bewegung der Bremsplatte (3) von der Ruhelage (4) in die Bremslage (5) ausgebildet ist.

12. Fahrzeug nach nach einem der Ansprüche 1 bis 11, **dadurch gekennzeichnet, dass** das Fahrzeug (1) eine Unterbodenverkleidung (29) aufweist und die Bremsplatte (3) in ihrer Ruhelage (4) plan mit oder gegenüber der Unterbodenverkleidung (29) zurückgesetzt angeordnet ist.

13. Fahrzeug nach einem der Ansprüche 1 bis 12, **dadurch gekennzeichnet, dass** wenigstens ein Bremselement (23), insbesondere Reibbelag, die Bremsplatte (3) ausbildet.

14. Fahrzeug nach einem der Ansprüche 1 bis 13, **dadurch gekennzeichnet, dass** das Zugelement (8) am vorderen und am hinteren Fahrschemel und die Stelleinrichtung (7, 22) an der, insbesondere hinteren, Unterseite (2) des Fahrzeugs (1) an das Fahrzeug (1) fest anschließen.

15. Fahrzeug nach einem der Ansprüche 1 bis 14, **dadurch gekennzeichnet, dass** ein mit der Bremsplatte (3) mitbewegbares Schild (17) zwischen Fahrzeug (1) und Bremsplatte (3) vorgesehen ist.

## Claims

1. Vehicle with at least one brake plate (3) arranged on its underside (2) and provided with an adjustment device (7, 22) for moving the brake plate (3) from a rest position (4) to a braking position (5) on the surface of the carriageway (6), that connects the brake plate (3) with the vehicle (1) via at least one beam (15) so that it can move mechanically, wherein the brake plate (3) is connected, in addition to the adjustment device (7, 2), to the vehicle (1) by a flexible tie (8), more particularly at least one cable (9, 31) or strip, so that it can move mechanically, **characterised in that** the adjustment device (7, 22) exhibits vibration means (10) actively to generate a vibration on the brake plate (3) in its braking position (5) on the surface of the carriageway (6).

2. Vehicle according to claim 1, **characterised in that** the frequency of vibration is outside the resonance frequency of the vehicle (1).

3. Vehicle according to claim 1 or 2, **characterised in that** at least one flexible element (8) exhibits at least one electrical cable (28) for providing electrical power to the vibration means (10).

4. Vehicle according to claim 1, 2 or 3, **characterised in that** the vibration means (10) exhibits at least one piezoelectric element (26) generating a vibration, that is fastened to the brake plate (3).

5. Vehicle according to claim 1, 2 or 3, **characterised in that** the vibration means (10) exhibits at least one pyrotechnical element (27) generating a vibration, that is fastened to the brake plate (3).

6. Vehicle according to claim 1, 2 or 3, **characterised in that** the adjustment device (7, 22) exhibits a valve (12) connected to an inflatable element (11), with which the fill level of the inflatable element (11) can be changed depending on its opening and closing, to generate a vibration on the brake plate (3).

7. Vehicle according to any one of claims 1 to 6, **characterised in that** the beam (15) exhibits a moving rod (18) and/or at least one inflatable element (11, 13), more particularly consisting of wherein the beam (15) is fastened to the brake plate (3).

8. Vehicle according to claim 7, **characterised in that** the inflatable element (11, 13) is arranged within the rod (15) of the adjustment device (7).

9. Vehicle according to claim 7 or 8, **characterised in that** the adjustment device (7, 22) supports the brake plate (3) so that it can move, depending on the fill level of at least one inflatable element (11, 13).

10. Vehicle according to claim 7, 8 or 9, **characterised in that** the adjustment device (7, 22) exhibits at least two inflatable elements (11, 13) and a valve (12), from which an inflatable element (11) is connected to the valve (12) for a varying fill level and the other (13) to a pressure source (14) for a constant fill level.

11. Vehicle according to any one of claims 1 to 10, **characterised in that** the brake plate (3) in the rest position (4) is covered with a film (30) at least in regions, wherein the film (30) is tearable and is therefore formed for a release of the brake plate (3) depending on the movement of the brake plate (3) from the rest position (4) to the braking position (5).

12. Vehicle according to any one of claims 1 to 11, **characterised in that** the vehicle (1) exhibits underbody panelling (29) and the brake plate (3) is arranged plane or set back from the underbody panelling (29) in the rest position (4).

13. Vehicle according to claims 1 to 12, **characterised in that** at least one brake element (23), more particularly a friction pad, forms the brake plate (3).

14. Vehicle according to any one of claims 1 to 13, **characterised in that** the tie (8) is firmly connected to the front and rear subframe and the adjustment device (7, 22) is firmly connected to the vehicle (1), more particularly at the rear, at the underside (2) of the vehicle (1).

15. Vehicle according to any one of claims 1 to 14, **characterised in that** a screen (17) that can moved with the brake plate (3) is provided between the vehicle (1) and the brake plate (3).

## Revendications

1. Véhicule pourvu d'au moins un plateau de frein (3) agencé sur sa face inférieure (2) et d'un dispositif de servocommande (7, 22) prévu pour déplacer le plateau de frein (3) d'une position de repos (4) à une position de freinage (5) sur la surface de la chaussée (6), ledit dispositif de servocommande reliant de manière mobile et mécanique le plateau de frein (3) au véhicule par au moins un support (15), le plateau de frein (3) étant, outre par le dispositif de servocommande (7, 22), en liaison mécanique mobile avec le véhicule (1) par un élément de traction (8) souple en flexion, notamment au moins un câble (9, 31) ou une sangle, **caractérisé en ce que** le dispositif de servocommande (7, 22) présente des moyens de vibration (10) destinés à générer activement une vibration sur le plateau de frein (3) dans sa position de freinage (5) sur la surface de la chaussée (6).

2. Véhicule selon une revendication 1, **caractérisé en ce que** la fréquence de la vibration se situe en dehors de la fréquence de résonance du véhicule (1).

3. Véhicule selon la revendication 1 ou 2, **caractérisé en ce qu'**au moins un élément de traction (8) souple en flexion présente au moins un câble électrique (28) pour l'alimentation en énergie électrique des moyens de vibration (10).

4. Véhicule selon la revendication 1, 2 ou 3, **caractérisé en ce que** les moyens de vibration (10) présentent au moins un élément piézoélectrique (26) qui génère la vibration et est fixé au plateau de frein (3).

5. Véhicule selon la revendication 1, 2 ou 3, **caractérisé en ce que** les moyens de vibration (10) présentent au moins un élément pyrotechnique (27) qui génère la vibration et est fixé au plateau de frein (3).

6. Véhicule selon la revendication 1, 2 ou 3, **caractérisé en ce que** le dispositif de servocommande (7, 22) présente une soupape (12) reliée à un élément gonflable (11) qui permet de modifier le degré de remplissage de l'élément gonflable (11) en fonction de son ouverture et fermeture pour générer une vibration sur le plateau de frein (3).

7. Véhicule selon l'une quelconque des revendications 1 à 6, **caractérisé en ce que** le support (15) présente une tringlerie (18) mobile et/ou au moins un élément gonflable (11, 13), et en est notamment constitué, le plateau de frein (3) étant fixé au support (15).

8. Véhicule selon la revendication 7, **caractérisé en ce que** l'élément gonflable (11, 13) est agencé à l'intérieur de la tringlerie (15) du dispositif de servocommande (7).

9. Véhicule selon la revendication 7 ou 8, **caractérisé en ce que** le dispositif de servocommande (7, 22) dispose de manière mobile le plateau de frein (3) en fonction du degré de remplissage d'au moins un élément gonflable (11, 13).

10. Véhicule selon la revendication 7, 8 ou 9, **caractérisé en ce que** le dispositif de servocommande (7, 22) présente au moins deux éléments gonflables (11, 13) et une soupape (12) dont l'un des éléments gonflables (11) est relié à la soupape (12) pour un degré de remplissage varié, et l'autre élément gonflable (13), lui, à une source de tension (14) pour un degré de remplissage constant.

11. Véhicule selon l'une quelconque des revendications 1 à 10, **caractérisé en ce que** le plateau de frein (3) en position de repos (4) est recouvert au moins en certaines zones d'un film (30), ledit film (30) étant conçu déchirable et ainsi pour dégager le plateau de frein (3) en fonction du mouvement du plateau de frein (3) passant de la position de repos (4) dans la position de freinage (5).

12. Véhicule selon l'une quelconque des revendications 1 à 11, **caractérisé en ce que** le véhicule (1) présente un parement de bas de caisse (29) et que le plateau de frein (3) est agencé, dans sa position de repos (4), de manière plane avec le parement de bas de caisse (29) ou en retrait par rapport à celui-ci.

13. Véhicule selon l'une quelconque des revendications 1 à 12, **caractérisé en ce qu'**au moins un élément de freinage (23), notamment une garniture de frottement, forme le plateau de frein (3).

14. Véhicule selon l'une quelconque des revendications 1 à 13, **caractérisé en ce que** l'élément de traction (8), aux cadres d'essieu avant et arrière, et le dispositif de servocommande (7, 22), à la face inférieure (2), notamment arrière, du véhicule (1), sont fermement raccordés au véhicule (1).

15. Véhicule selon l'une quelconque des revendications 1 à 14, **caractérisé en ce qu'**est prévu un écran (17) déplaçable en même temps que le plateau de frein (3) entre le véhicule (1) et le plateau de frein (3).
